# EUROPEAN PATENT SPECIFICATION

(11) **EP 4 242 436 B1**
(45) Date of publication and mention of the grant of the patent: **23.07.2025**
(21) Application number: 22160926.6
(22) Date of filing: 08.03.2022
(51) Int. Cl.: F01P 11/02, F01P 11/18, F16H 57/04, F01M 11/00, F01M 11/12

(54) **A TANK**
TANK
RÉSERVOIR

(43) Date of publication of application: 13.09.2023
(73) Proprietor: Ningbo Geely Automobile Research & Development Co. Ltd., Hangzhou Bay New District Ningbo 315336 (CN); Zhejiang Geely Holding Group Co., Ltd., Hangzhou, Zhejiang 310051 (CN)
(72) Inventor: BERGMAN, Ulf, 423 38 TORSLANDA (SE); JÖNSSON, Mikael, 439 94 ONSALA (SE)
(74) Representative: Zacco Sweden AB

(56) References cited:
- WO-A1-2020/053468
- FR-A1- 2 567 256
- FR-A1- 2 841 187
- FR-A1- 2 890 109
- KR-A- 20200 113 731

## Description

### TECHNICAL FIELD

The invention relates to a tank having a housing which provides a space for a liquid, and a vehicle comprising such a tank.

### BACKGROUND

A vehicle usually has a cooling system including a coolant expansion tank. Such a coolant expansion tank has a level sensor arranged to indicate the level of coolant, particularly when the level is low and additional coolant has to be filled into the cooling system.

If the vehicle is driven on a sloping road or is heavily accelerated, the surface of the coolant in the coolant expansion tank can however be inclined relative to the tank such that the level sensor wrongly indicates low level of coolant.

This means that the driver of the vehicle can receive false alarms indicating low level of coolant. The problem may occur for example when driving uphill or downhill, in a roundabout, during cornering or in case of heavy acceleration or deceleration.

Document FR2890109 describes a device for regulating the liquid phase of a cooling circuit of a vehicle. A reservoir or degassing box is used for separation of gases from the coolant. A plunger tube submerged in the liquid inside the enclosure is used for reducing the speed of the fluid and minimizing the cascade effect when the coolant entering the enclosure via an inlet.

Document WO2020/053468A1 discloses a tank with a level sensor.

### SUMMARY

An objective of the invention is to provide a tank, particularly for a vehicle, which tank can reduce the problem associated with an inclined liquid surface in the tank.

The objective is achieved by a tank according to claim 1.

The invention is based on the insight that by such a tank, a higher level of liquid can be maintained in the tank when the liquid surface is inclined. In case of an inclined liquid surface, air will be trapped in the upper part of the sub space preventing liquid from filling the sub space which in turn results in a higher level of liquid in the space outside the sub space.

Since the tank has a level sensor indicating the level of liquid in the tank, which level sensor is arranged in the space outside the sub space, a higher level of liquid can be maintained at the position for the level sensor when the liquid surface is inclined, thereby avoiding false alarms.

The tank can be any container or limited space containing a liquid where access to the liquid is needed when the liquid level is low, such as a coolant tank, an oil sump of a combustion engine, transmission, etc., and not only when the level of liquid is to be measured. For example, in case the tank has a pump for pumping liquid out from the tank, an inlet of the pump can be arranged in the space outside the sub space for enabling pumping of liquid when the liquid surface is inclined.

According to a further embodiment of the tank, the tank is a coolant tank for a coolant system of a vehicle. The limited space available in an engine compartment of a vehicle often determines the shape of a coolant tank arranged in the engine compartment. The invention is advantageously applied for a coolant tank that is relatively flat (shallow) and/or oblong (long) since such a coolant tank is more sensitive to inclination of the liquid surface.

According to one embodiment of the tank, the enclosure comprises at least one wall extending inside the tank from an upper portion of the housing in a direction towards a lower portion of the housing. Hereby, the enclosure can be integrated in the housing and the tank can be produced in a rational way.

According to a further embodiment of the tank, the enclosure is a tube. Hereby, a cup-like enclosure providing the sub space can be achieved. The tube can have a cross section adapted to the shape of the tank. For example, the cross section can be quadrangular, such as rectangular, or the tube can have a circular cross section. The longitudinal extension direction of the tube, when the tank is horizontal, is preferably substantially vertical.

According to a further embodiment of the tank, a lower end of the tube is slanted, wherein the end surface of the lower end of the tube is inclined with an angle α relative to a horizontal plane such that the end surface slopes downwards in a direction towards a vertical centerline of the housing. Hereby, the efficiency of the sub space trapping air can be further increased. The angle α can be in the range 5°<α<50°, preferably in the range 10<α<45°.

According to a further embodiment of the tank, the enclosure is arranged at a distance from a side wall of the housing whereby a gap between the enclosure and the side wall is created in a horizontal direction. Hereby, it is secured that liquid can circulate and be collected in the space of the housing outside the enclosure when air is trapped in the sub space.

According to a further embodiment of the tank, the enclosure has a length in a vertical direction which length is less than the distance between a top wall of the housing and a bottom wall of the housing, and a gap is arranged between the enclosure and the bottom wall of the housing. Hereby, it is secured that the space and the sub space are fluidly connected to each other at the same time as the liquid can pass under the enclosure.

For example, the length of the enclosure in the vertical direction can be in a range of 0.3-0.9, preferably 0.5-0.8 times the distance between the top wall and the bottom wall of the housing.

According to a further embodiment, the tank has a plurality of said enclosure providing a plurality of said sub space. Hereby, the capacity to trap air can be further increased, and air can be trapped for different inclinations of the liquid surface.

According to a further embodiment of the tank, the enclosures are arranged at a distance from each other creating a gap between adjacent enclosures in a horizontal direction. Hereby, it is secured that liquid can circulate and be collected in the space of the housing outside the enclosures when air is trapped in the sub spaces.

The invention also relates to a vehicle comprising a tank according to the invention, particularly a coolant tank for a coolant system.

Further advantages and advantageous features of the invention are disclosed in the following description and in the claims.

### BRIEF DESCRIPTION OF THE DRAWINGS

With reference to the appended drawings, below follows a more detailed description of embodiments of the invention cited as examples.

In the drawings:
Fig. 1A is a schematic view showing a tank with liquid,
Fig. 1B is a cross section view taken along B-B in Fig. 1A,
Fig. 1C is a cross section view taken along B-B for a variant of the tank,
Fig. 2A shows the tank illustrated in Fig. 1A when the liquid surface is inclined by g-forces,
Fig. 2B shows the tank illustrated in Fig. 1A when the tank is inclined,
Fig. 3A is a perspective view showing the upper side of a coolant tank,
Fig. 3B is a perspective view showing the underside of the tank in Fig. 3A,
Fig. 4A shows an upper portion of the tank in Fig. 3A in a view from below,
Fig. 4B shows lower portion of the tank in Fig. 3A in a view from above,
Fig. 5 is a cut view of the tank in Fig. 3A, and
Fig. 6 shows a vehicle with a tank according to the invention.

### DETAILED DESCRIPTION OF EXAMPLE EMBODIMENTS

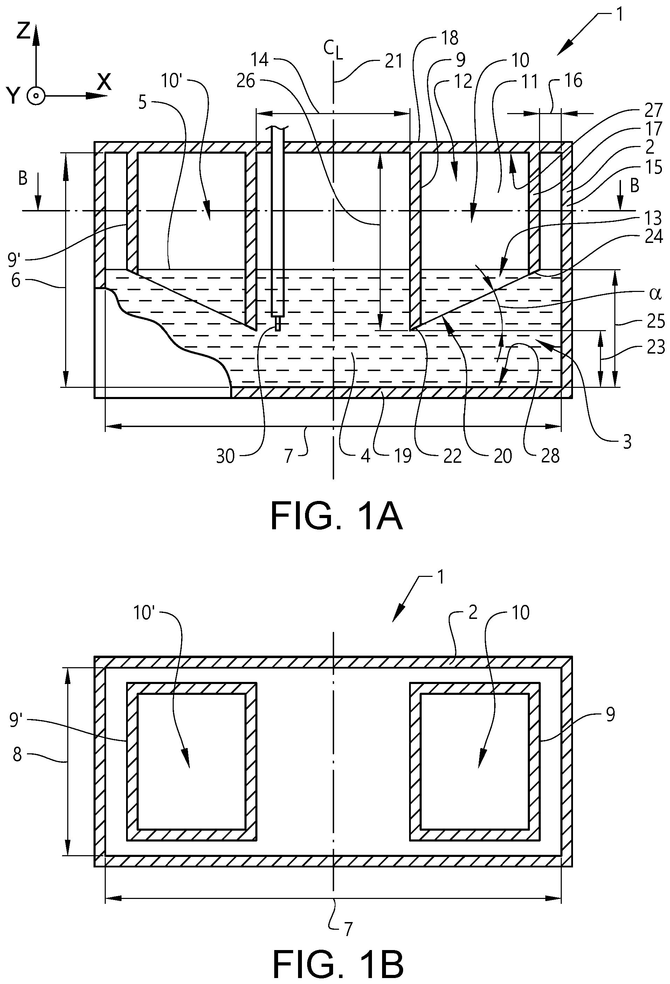

Fig. 1A shows a tank 1 in a schematical view, such as a cooling expansion tank for a vehicle. The tank 1 has a housing 2 which provides a space 3 for a liquid 4, such as a coolant. As an example, and for illustration purposes, in Fig. 1A, the tank 1 is partly cut and approximately half filled with the liquid 4 which is indicated with dashed lines.

In Fig. 1A, the tank 1 is arranged horizontally and the liquid surface 5 is also horizontal. This is the case for example when the tank 1 is installed in a vehicle standing on level ground. See also a cartesian coordinate system X, Y, Z, where all axes are orthogonal to each other, introduced for facilitating the description of the tank. The directions and axes used herein, i.e. the X-axis, Y-axis and the Z-axis, are arranged relative to the tank 1 such that when the tank 1 is horizontally arranged, the Z-axis is a vertical axis in parallel with a height 6 of the tank 1, the X-axis is a horizontal axis in parallel with a length 7 of the tank 1, and the Y-axis is a horizontal axis in parallel with a width 8 of the tank 1. When using "horizontal", "vertical", etc., herein, reference is made to this horizontal position of the tank as illustrated in Fig. 1A.

See also Fig. 1B showing the tank 1 in a cross section view from above taken along B-B in Fig. 1A.

The tank 1 further comprising an enclosure 9 arranged inside the housing 2. The enclosure 9 forms a sub space 10 at an upper part 11 of the housing 2 for trapping air when the liquid surface 5 in the tank 1 is inclined relative to the housing 2. An upper end 12 of the enclosure 9 is closed and airtight and a lower end 13 of the enclosure 9 is open connecting the space 3 and the sub space 10 fluidly to each other. The tank 1 may comprise a plurality of said enclosure 9 providing a plurality of said sub space 10. In the example embodiment illustrated in Fig. 1A, the tank 1 has two such enclosures 9, 9' each providing a sub space 10, 10'. The enclosures 9, 9' are arranged at a distance from each other creating a gap 14 between adjacent enclosures in the horizontal direction. Each enclosure 9 is arranged at a distance from a side wall 15 of the housing whereby a gap 16 between the enclosure 9 and the side wall 15 is created in a horizontal direction.

Each enclosure 9 comprises at least one wall 17 extending inside the tank 1 from an upper portion 18 of the housing 2 in a direction towards a lower portion 19 of the housing 2. The enclosure is suitably a tube 9, where the longitudinal extension direction of the tube is substantially vertical. The tube 9 is closed in the upper end 12 and open in the lower end 13.

As shown in Fig. 1B, the enclosures 9, 9' defining the sub spaces 10, 10' may have quadrangular cross sections, but other shapes are also possible.

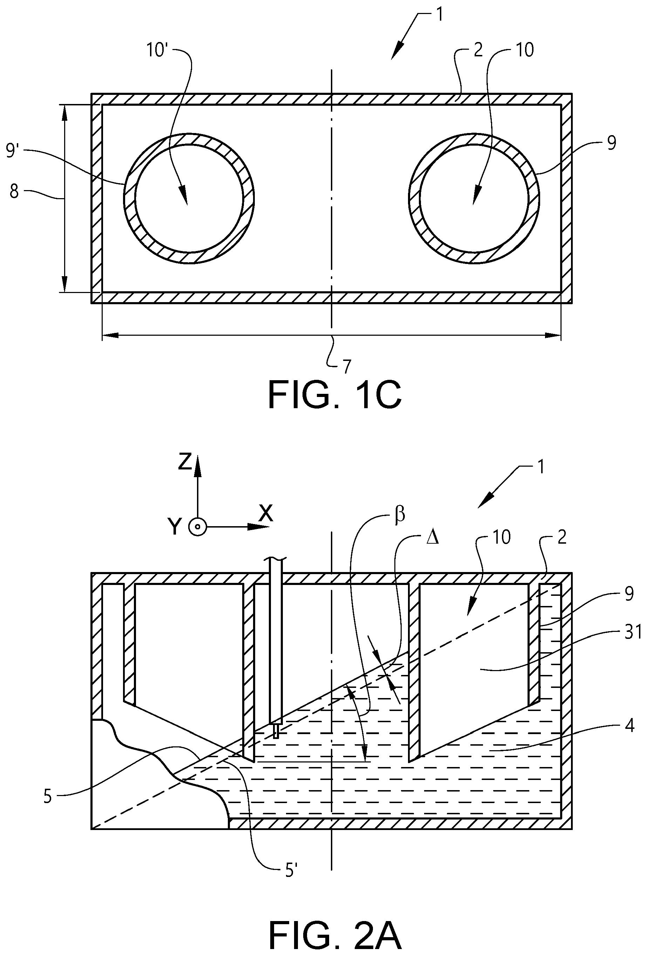

Fig. 1C is a cross section view showing a variant of the tank where the enclosures 9, 9' have circular cross sections.

Preferably, the lower end 13 of the tube 9 is slanted, such that the end surface 20 of the lower end 13 of the tube 9 is inclined with an angle α relative to a horizontal plane, and the end surface 20 slopes downwards in a direction towards a vertical centerline 21 of the housing 2. The horizontal plane is in parallel with the plane defined by the X-axis and the Y-axis. The vertical centerline 21 is in parallel with the Z-axis.

In other words; the end surface 20 of the lower end 13 of the tube 9 is inclined such that a part 22 of the end surface 20 arranged with the smallest distance 23 to the lower portion 19 is arranged closest to the vertical centerline 21 of the housing 2, and a part 24 of the end surface 20 arranged with the greatest distance 25 to the lower portion 19 is arranged furthest from the vertical centerline 21.

The enclosure 9 suitably has a length 26 in a vertical direction which length is less than the distance between a top wall 27 of the housing 2 and a bottom wall 28 of the housing 2, and a gap 23 is arranged between the enclosure 9 and the bottom wall 28 of the housing 2 in a vertical direction.

The tank has a level sensor 30 indicating the level of liquid 4 in the tank 1. Such a level sensor 30 is arranged in the space 3 outside the sub space 10.

Fig. 2A shows the tank 1 illustrated in Fig. 1A when the liquid surface 5 is inclined relative to the horizontal housing 2. The liquid surface 5 is inclined with an angle β relative to the horizontal axis X. Such an inclination can arise due to acceleration or deceleration of the tank (i.e. due to g-forces), for example when the tank 1 is installed in a vehicle driving along a road.

The sub space 10 of the enclosure 9 to the right is filled with air 31 preventing liquid 4 from reaching the sub space 10. The actual liquid surface 5 is indicated with a solid line and further, a dotted line indicates the liquid surface 5' or level that would have been present in case there was no enclosure trapping air. The increased level of liquid 4 due to the trapped air is the difference Δ between the solid line and the dotted line.

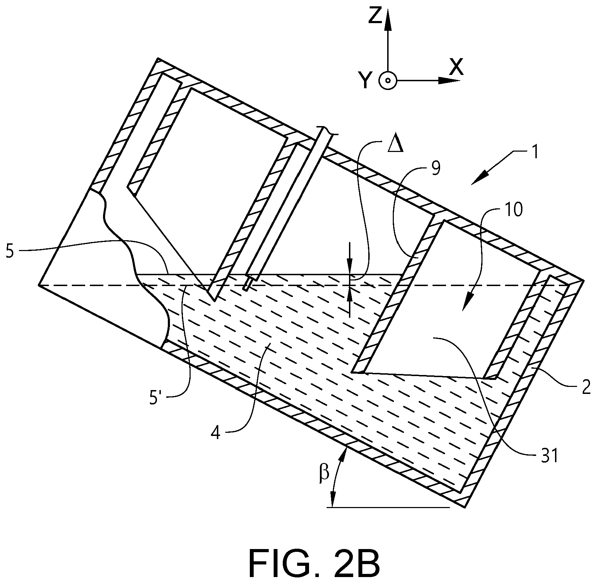

Fig. 2B shows the tank 1 illustrated in Fig. 1A when the tank 1 is inclined with an angle β relative to the horizontal axis X, whereas the liquid surface 5 is in parallel with the horizontal axis X. This means the liquid surface 5 is inclined with an angle β relative to the housing 2. Such an inclination of the tank 1 can arise when the tank 1 is installed in a vehicle driving along a sloping road.

In the same way as previously explained with reference to Fig. 2B, the sub space 10 of the enclosure 9 to the right is filled with air 31 preventing liquid 4 from reaching the sub space 10. The actual liquid surface 5 is indicated with a solid line and further a dotted line indicates the liquid surface 5' or level that would have been present in case there was no enclosure trapping air. The increased level of liquid 4 due to the trapped air is the difference Δ between the solid line and the dotted line.

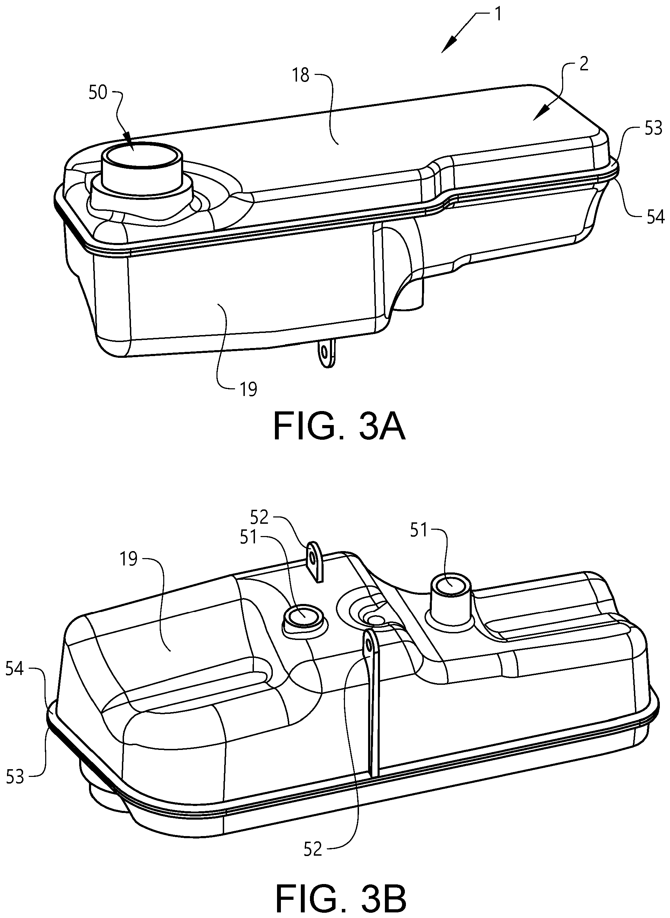

Figs. 3A and 3B show in perspective views from above and below, respectively, a further example embodiment of the tank constituting a vehicle coolant expansion tank. Primarily, the features unique for this example embodiment are described. As it regards previously described features, reference is made to the description hereinabove. Further, same reference numerals have been used for similar or equal components.

The expansion coolant tank 1 is relatively flat (shallow) in comparison to the length (and width) of the tank. The limited space available in an engine compartment of a vehicle often determines the shape of a coolant tank arranged in the engine compartment. Such a shallow coolant tank can be more sensitive to inclination of the liquid surface resulting in false low coolant level warnings.

The housing 2 of the tank 1 can be made from an upper portion 18, such as a cap, and a lower portion 19, such as a container. The upper portion and lower portion refer to the orientation of the tank 1 when installed in a vehicle. As appears from Fig. 3A, the cap 18 has an opening 50 for filling of coolant into the tank 1. As appears from Fig. 3B, the container 19 has connections 51 for connecting the tank fluidly to a coolant system of a vehicle. Further, the tank 1 has brackets 52 for attachment of the tank 1 in the engine compartment.

The cap 18 and the container 19 are suitably provided with flanges 53, 54 for connecting the cap 18 and the container 19 to each other in a waterproof way, permanently or in a divisible way.

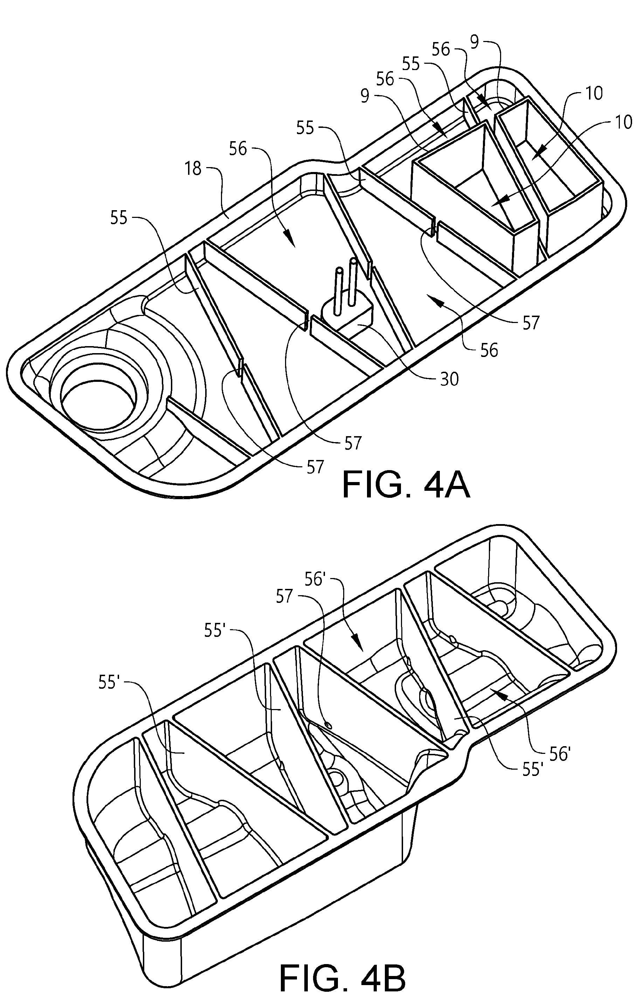

Fig. 4A shows the cap 18 from below. On the inside of the cap 18, walls 55 can be arranged to divide the housing 2 into several compartments 56 to counteract too fast transport and splash of coolant when the tank 1 is subjected to acceleration or deceleration. In such a case, some openings 57 have to be arranged in the walls 55 to enable coolant to flow, with a reduced speed instead, in the housing 2 which provides one continuous space for the coolant.

In the example embodiment illustrated in Fig. 4A, the tank 1 is provided with two enclosures 9 forming two sub spaces 10 in the tank 1. For the two compartments 56 to the right in Fig. 4A, one enclosure 9 is arranged in each compartment 56 for trapping air when the liquid surface in the tank 1 is inclined relative to the housing 2. Each enclosure 9 is designed as a tube extending from the cap 18 towards the container 19 when the cap and container are connected to each other.

Fig. 4B shows the container 19 from above. On the inside of the container 19, in the same way as previously described for the cap 18, walls 55' can be arranged in the bottom of the container 19 to divide the housing 2 into the several compartments 56' to counteract too fast transport and splash of coolant when the tank is subjected to acceleration or deceleration. The walls 55 of the cap 18 and the walls 55' of the container 19 are suitably designed such that when the cap 18 and the container 19 are connected, a respective cap wall 55 and a respective container wall 55' together form a complete wall corresponding to the height of the housing 2. In such a case, some openings 57 may have to be arranged in the container walls 55' as well, allowing coolant to be transported with a reduced speed.

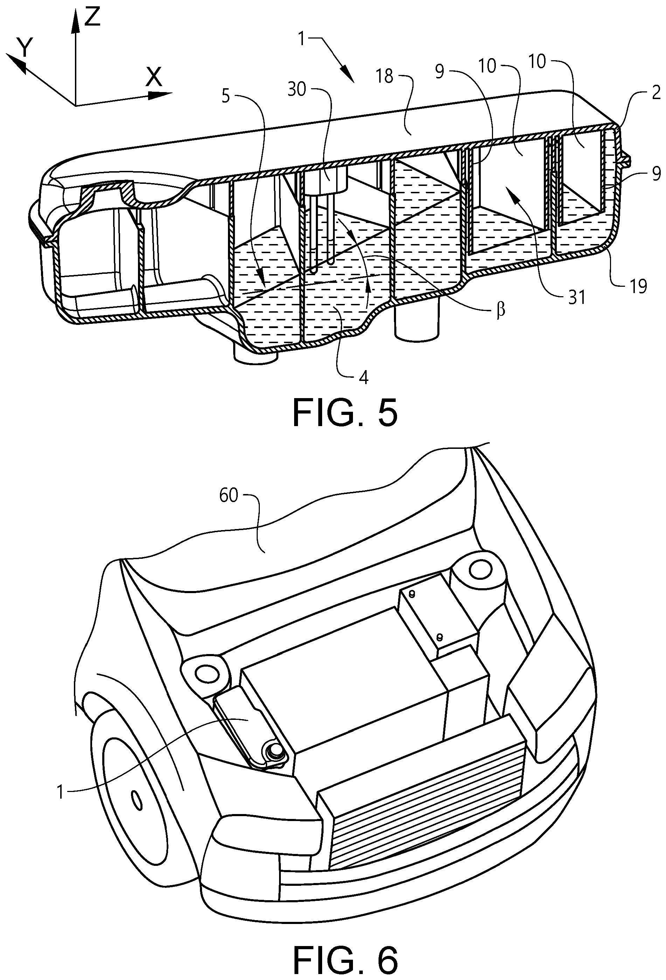

In the example embodiment illustrated in Fig. 4B, for the two compartments 56' to the right, one enclosure 9 is received in each compartment 56' when the cap 18 and the container 19 are connected to each other. See also Fig. 5.

Fig. 5 shows a cross section view of the tank 1 when the liquid surface 5 is inclined relative to the housing 2. The liquid surface 5 is inclined relative to the horizontal housing 2. The liquid surface 5 is inclined with an angle β relative to the horizontal axis X. Such an inclination can as already mentioned arise due to acceleration or deceleration of the tank 1 (i.e. due to g-forces), for example when the tank 1 is installed in a vehicle driving along a road. Since the sub space 10 of each enclosure 9 is filled with air 31 preventing liquid 4 from reaching the sub space 10, the level of liquid reaches the level sensor 30.

Fig. 6 shows a vehicle 60 provided with a tank 1 according to the invention used as an expansion coolant tank.

It is to be understood that the present invention is not limited to the embodiments described above and illustrated in the drawings; rather, the skilled person will recognize that many changes and modifications may be made within the scope of the appended claims.

## Claims

1. A tank (1) having a housing (2) which provides a space (3) for a liquid (4), **characterized in that** an enclosure (9) forming a sub space (10) is arranged inside the housing (2) at an upper part (11) of the housing for trapping air when the liquid surface (5) in the tank is inclined relative to the housing (2), an upper end (12) of the enclosure (9) being closed and airtight and a lower end (13) of the enclosure (9) being open connecting the space (3) and the sub space (10) fluidly to each other, wherein the tank (1) has a level sensor (30) indicating the level of liquid (4) in the tank, the level sensor (30) being arranged in the space (3) outside the sub space (10).

2. A tank according to claim 1, **characterized in that** the enclosure (9) comprises at least one wall (17) extending inside the tank from an upper portion (18) of the housing (2) in a direction towards a lower portion (19) of the housing (2).

3. A tank according to claim 1 or 2, **characterized in that** the enclosure is a tube (9).

4. A tank according to claim 3, **characterized in that** the longitudinal extension direction of the tube (9) is substantially vertical.

5. A tank according to claim 3 or 4, **characterized in that** a lower end (13) of the tube (9) is slanted, the end surface (20) of the lower end of the tube being inclined with an angle (α) relative to a horizontal plane such that the end surface (20) slopes downwards in a direction towards a vertical centerline (21) of the housing (2).

6. A tank according to claim 5, **characterized in that** the angle (α) is in the range 5°-50°, preferably 10°-45°.

7. A tank according to any preceding claim, **characterized in that** the enclosure (9) is arranged at a distance from a side wall (15) of the housing (2) whereby a gap (16) between the enclosure (9) and the side wall (15) is created in a horizontal direction.

8. A tank according to any preceding claim, **characterized in that** the enclosure (9) has a length (26) in a vertical direction which length is less than the distance between a top wall (27) of the housing (2) and a bottom wall (28) of the housing (2), and a gap (23) is arranged between the enclosure (9) and the bottom wall (28) of the housing (2).

9. A tank according to claim 8, **characterized in that** the length (26) of the enclosure (9) in the vertical direction is in a range of 0.3-0.9, preferably 0.5-0.8 times the distance between the top wall (27) and the bottom wall (28) of the housing (2).

10. A tank according to any preceding claim, **characterized in that** the tank has a pump for pumping liquid out from the tank, an inlet of the pump being arranged in the space outside the sub space.

11. A tank according to any preceding claim, **characterized in that** the tank (1) has a plurality of said enclosure (9) providing a plurality of said sub space (10).

12. A tank according to claim 11, **characterized in that** the enclosures (9, 9') are arranged at a distance from each other creating a gap (14) between adjacent enclosures (9, 9') in a horizontal direction.

13. A tank according to any preceding claim, **characterized in that** the tank (1) is a coolant tank for a coolant system of a vehicle (60).

14. A vehicle (60) comprising a tank (1) according to any of claims 1-13.

## Patentansprüche

1. Tank (1) mit einem Gehäuse (2), der einen Raum (3) für eine Flüssigkeit (4) bereitstellt, **dadurch gekennzeichnet, dass** eine Umgrenzung (9), die einen Teilraum (10) bildet, innerhalb des Gehäuses (2) in einem oberen Teil (11) des Gehäuses zum Einschließen von Luft angeordnet ist, wenn die Flüssigkeitsfläche (5) in dem Tank relativ zu dem Gehäuse (2) geneigt ist, wobei ein oberes Ende (12) der Umgrenzung (9) geschlossen und luftdicht ist und ein unteres Ende (13) der Umgrenzung (9) offen ist, wobei es den Raum (3) und den Teilraum (10) miteinander fluidverbindet, wobei der Tank (1) einen Pegelsensor (30) aufweist, der den Pegel der Flüssigkeit (4) in dem Tank angibt, wobei der Pegelsensor (30) in dem Raum (3) außerhalb des Teilraums (10) angeordnet ist.

2. Tank nach Anspruch 1, **dadurch gekennzeichnet, dass** die Umgrenzung (9) mindestens eine Wand (17) umfasst, die sich innerhalb des Tanks von einem oberen Abschnitt (18) des Gehäuses (2) in eine Richtung hin zu einem unteren Abschnitt (19) des Gehäuses (2) erstreckt.

3. Tank nach Anspruch 1 oder 2, **dadurch gekennzeichnet, dass** die Umgrenzung ein Rohr (9) ist.

4. Tank nach Anspruch 3, **dadurch gekennzeichnet, dass** die Längserstreckungsrichtung des Rohrs (9) im Wesentlichen vertikal ist.

5. Tank nach Anspruch 3 oder 4, **dadurch gekennzeichnet, dass** ein unteres Ende (13) des Rohrs (9) abgeschrägt ist, wobei die Endfläche (20) des unteren Endes des Rohrs in einem Winkel (α) relativ zu einer horizontalen Ebene geneigt ist, so dass die Endfläche (20) nach unten in eine Richtung hin zu einer vertikalen Mittellinie (21) des Gehäuses (2) abfällt.

6. Tank nach Anspruch 5, **dadurch gekennzeichnet, dass** der Winkel (α) in dem Bereich von 5° bis 50°, vorzugsweise 10° bis 45°, liegt.

7. Tank nach einem vorstehenden Anspruch, **dadurch gekennzeichnet, dass** die Umgrenzung (9) in einem Abstand zu einer Seitenwand (15) des Gehäuses (2) angeordnet ist, wodurch ein Spalt (16) zwischen der Umgrenzung (9) und der Seitenwand (15) in einer horizontalen Richtung gebildet wird.

8. Tank nach einem vorstehenden Anspruch, **dadurch gekennzeichnet, dass** die Umgrenzung (9) eine Länge (26) in einer vertikalen Richtung aufweist, wobei die Länge kürzer als ein Abstand zwischen einer Deckwand (27) des Gehäuses (2) und einer Bodenwand (28) des Gehäuses (2) ist und ein Spalt (23) zwischen der Umgrenzung (9) und der Bodenwand (28) des Gehäuses (2) ist.

9. Tank nach Anspruch 8, **dadurch gekennzeichnet, dass** die Länge (26) der Umgrenzung (9) in vertikaler Richtung in einem Bereich des 0,3 bis 0,9 Fachen, vorzugsweise 0,5 bis 0,8 Fachen, des Abstands zwischen der Deckwand (27) und der Bodenwand (28) des Gehäuses (2) liegt.

10. Tank nach einem vorstehenden Anspruch, **dadurch gekennzeichnet, dass** der Tank eine Pumpe zum Pumpen von Flüssigkeit aus dem Tank aufweist, wobei ein Einlass der Pumpe in dem Raum außerhalb des Teilraums angeordnet ist.

11. Tank nach einem vorstehenden Anspruch, **dadurch gekennzeichnet, dass** der Tank (1) eine Mehrzahl der Umgrenzung (9) aufweist, die eine Mehrzahl des Teilraums (10) bereitstellt.

12. Tank nach Anspruch 11, **dadurch gekennzeichnet, dass** die Umgrenzungen (9, 9') in einem Abstand zueinander angeordnet sind, wobei ein Spalt (14) zwischen angrenzenden Umgrenzungen (9, 9') in einer horizontalen Richtung gebildet wird.

13. Tank nach einem vorstehenden Anspruch, **dadurch gekennzeichnet, dass** der Tank (1) ein Kältemitteltank für ein Kühlsystem eines Fahrzeugs (60) ist.

14. Fahrzeug (60), das einen Tank (1) nach einem der Ansprüche 1 bis 13 umfasst.

## Revendications

1. Réservoir (1) comportant un boîtier (2) qui fournit un espace (3) pour un liquide (4), **caractérisé en ce qu'une** enceinte (9) formant un sous-espace (10) est disposée à l'intérieur du boîtier (2) à une partie supérieure (11) du boîtier pour piéger l'air lorsque la surface du liquide (5) dans le réservoir est inclinée par rapport au boîtier (2), une extrémité supérieure (12) de l'enceinte (9) étant fermée et étanche à l'air et une extrémité inférieure (13) de l'enceinte (9) étant ouverte reliant fluidiquement l'espace (3) et le sous-espace (10) l'un à l'autre, dans lequel le réservoir (1) comporte un capteur de niveau (30) indiquant le niveau de liquide (4) dans le réservoir, le capteur de niveau (30) étant disposé dans l'espace (3) à l'extérieur du sous-espace (10).

2. Réservoir selon la revendication 1, **caractérisé en ce que** l'enceinte (9) comprend au moins une paroi (17) s'étendant à l'intérieur du réservoir depuis une partie supérieure (18) du boîtier (2) en direction d'une partie inférieure (19) du boîtier (2).

3. Réservoir selon la revendication 1 ou 2, **caractérisé en ce que** l'enceinte est un tube (9).

4. Réservoir selon la revendication 3, **caractérisé en ce que** la direction d'extension longitudinale du tube (9) est sensiblement verticale.

5. Réservoir selon la revendication 3 ou 4, **caractérisé en ce qu'une** extrémité inférieure (13) du tube (9) est inclinée, la surface d'extrémité (20) de l'extrémité inférieure du tube étant inclinée d'un angle (α) par rapport à un plan horizontal de telle sorte que la surface d'extrémité (20) soit inclinée vers le bas en direction d'une ligne médiane verticale (21) du boîtier (2).

6. Réservoir selon la revendication 5, **caractérisé en ce que** l'angle (α) est compris entre 5° et 50°, de préférence entre 10° et 45°.

7. Réservoir selon l'une quelconque des revendications précédentes, **caractérisé en ce que** l'enceinte (9) est disposée à distance d'une paroi latérale (15) du boîtier (2), de sorte qu'un espace (16) entre l'enceinte (9) et la paroi latérale (15) est créé dans une direction horizontale.

8. Réservoir selon l'une quelconque des revendications précédentes, **caractérisé en ce que** l'enceinte (9) présente une longueur (26) dans une direction verticale, laquelle longueur est inférieure à la distance entre une paroi supérieure (27) du boîtier (2) et une paroi inférieure (28) du boîtier (2), et un espace (23) est ménagé entre l'enceinte (9) et la paroi inférieure (28) du boîtier (2).

9. Réservoir selon la revendication 8, **caractérisé en ce que** la longueur (26) de l'enceinte (9) dans la direction verticale est comprise dans une plage de 0,3 à 0,9, de préférence de 0,5 à 0,8 fois la distance entre la paroi supérieure (27) et la paroi inférieure (28) du boîtier (2).

10. Réservoir selon l'une quelconque des revendications précédentes, **caractérisé en ce que** le réservoir comporte une pompe pour pomper le liquide hors du réservoir, une entrée de la pompe étant disposée dans l'espace à l'extérieur du sous-espace.

11. Réservoir selon l'une quelconque des revendications précédentes, **caractérisé en ce que** le réservoir (1) comporte une pluralité de ladite enceinte (9) fournissant une pluralité dudit sous-espace (10).

12. Réservoir selon la revendication 11, **caractérisé en ce que** les enceintes (9, 9') sont disposées à distance les unes des autres créant un espace (14) entre des enceintes adjacentes (9, 9') dans une direction horizontale.

13. Réservoir selon l'une quelconque des revendications précédentes, **caractérisé en ce que** le réservoir (1) est un réservoir de liquide de refroidissement pour un système de refroidissement d'un véhicule (60).

14. Véhicule (60) comprenant un réservoir (1) selon l'une quelconque des revendications 1 à 13.
